# FASCICULE DE BREVET EUROPEEN

(11) **EP 3 762 263 B1**
(45) Date de publication et mention de la délivrance du brevet: **30.03.2022**
(21) Numéro de dépôt: 19759636.4
(22) Date de dépôt: 04.02.2019
(51) Int. Cl.: B60R 16/023, B60R 11/02, B60R 16/02

(54) **SUPPORT DE FIXATION POUR BOITIER ÉLECTRONIQUE DESTINE À ÊTRE MONTE DANS LA PARTIE LATÉRALE D'UN COFFRE DE VÉHICULE AUTOMOBILE**
BEFESTIGUNGSHALTERUNG FÜR EINE ELEKTRONISCHE EINHEIT ZUR MONTAGE IM SEITENTEIL EINES KRAFTFAHRZEUGKOFFERRAUMS
FASTENING SUPPORT FOR AN ELECTRONIC UNIT TO BE MOUNTED IN THE LATERAL PART OF A MOTOR VEHICLE BOOT

(30) Priorité: 05.03.2018 FR 1851850
(43) Date de publication de la demande: 13.01.2021
(73) Titulaire: PSA Automobiles SA, 78300 Poissy (FR)
(72) Inventeur: FAGET, Sebastien, 95220 Herblay (FR); TING, Andre, 92800 Puteaux (FR)
(86) Numéro de dépôt international: PCT/FR2019/050241
(87) Numéro de publication internationale: WO 2019/170969

(56) Documents cités:
- EP-A1- 3 246 579
- EP-B1- 1 093 954
- WO-A1-2011/039437
- WO-A1-2016/001532
- DE-A1-102016 208 977
- DE-C1- 10 206 503

## Description

### Domaine de l'invention

La présente invention concerne d'une manière générale la problématique de l'implantation d'un boîtier électronique dans le coffre d'un véhicule automobile.

Elle se rapporte en particulier à un support de fixation pour un tel boîtier électronique.

### Arrière-plan de l'invention

L'amélioration sensible de l'isolation sonore de l'habitacle des véhicules automobiles apparue ces dernières années a eu pour conséquence de sensibiliser de manière accrue les occupants du véhicule à la qualité sonore des systèmes audio de ces véhicules.

De manière générale, la puissance de l'amplificateur intégré dans l'autoradio (ou dans le module de diffusion sonore lorsque le véhicule est doté d'un dispositif d'info-divertissement plus évolué) est insuffisante pour alimenter de manière optimale les haut-parleurs qui nécessitent une certaine tension pour être excités.

Afin d'améliorer la restitution sonore, de plus en plus d'usagers font procéder à l'installation en après-vente d'amplificateurs audio externes se présentant sous la forme de boîtiers plus ou moins volumineux selon leur puissance.

En raison du dégagement important de chaleur qu'ils produisent en fonctionnement, ces amplificateurs audio doivent impérativement être situés dans des zones aérées permettant une bonne ventilation.

En pratique, un tel amplificateur est généralement implanté dans le coffre du véhicule contre une garniture d'habillage latérale en étant fixé directement au flanc latéral de la structure de caisse à l'aide de vis auto-taraudeuses ou par l'intermédiaire d'un support de fixation tel que décrit par exemple dans la demande européenne EP 3 246 579 A1.

Toutefois, ce type d'implantation en après-vente a pour inconvénient d'impacter négativement l'apparence visuelle du coffre et de compliquer le chargement des bagages qui doivent être maintenus écartés de l'amplificateur afin d'éviter que ce dernier ne surchauffe.

Le document WO2016/001532 montre un support de fixation pour boîtier électronique selon le préambule de la revendication 1 et décrit un ensemble comprenant un support comportant une partie centrale sur laquelle est fixé un boitier électronique, une première extrémité fixée à la caisse d'un véhicule et une deuxième extrémité, à l'opposé de la première extrémité par rapport à la partie centrale, comprenant des moyens de fixation d'un écran thermique permettant de maintenir l'écran thermique à distance du boitier électronique.

Pour répondre à la demande des usagers palier sans dégrader le niveau de qualité perçue à l'ouverture du coffre, certains constructeurs automobiles proposent en option sur certains modèles de véhicule des kits audio dotés d'un amplificateur intercalé entre une garniture d'habillage latérale de coffre et un flanc latéral de la structure de caisse à laquelle il est fixé.

Lorsqu'un tel amplificateur est présent, la garniture d'habillage latérale doit être écartée d'une distance suffisante vis-à-vis de cet amplificateur pour obtenir un espace de ventilation apte à évacuer la chaleur générée par ce dernier et éviter que cette garniture ne soit soumise à des températures trop élevées pouvant la détériorer.

A l'usage et afin de tenir compte de la déformation que peut subir une telle garniture d'habillage latérale en phase de virage du fait de la projection latérale des charges contenues dans le coffre, cet écartement est largement surdimensionné ce qui entraine une réduction sensible du volume utile de rangement.

Objet et résumé de l'invention

La présente invention vise donc à optimiser le volume de chargement du coffre tout en garantissant une ventilation suffisante pour l'amplificateur.

Elle propose à cet effet un support de fixation pour boîtier électronique selon la revendication 1 destiné à être monté dans la partie latérale d'un coffre de véhicule automobile entre un flanc latéral de la structure de caisse dudit véhicule et une garniture d'habillage latérale le recouvrant, ledit support comportant :
- une platine présentant une face externe d'accueil pour ledit boîtier,
- des moyens de fixation permettant de solidariser ledit boîtier à ladite platine, et
- des moyens d'arrimage permettant de solidariser ledit support audit flanc latéral ;
ledit support comportant également plusieurs bras de retenue s'étendant transversalement en saillie depuis ladite face externe de la platine et présentant des extrémités libres recourbées de sorte à reposer en appui contre la face interne de ladite garniture d'habillage latérale. Lorsque la platine est installée sur le véhicule, lesdits moyens d'arrimage comportent une première patte s'étendant à une première extrémité de ladite platine et présentant un orifice d'attache circulaire, ainsi qu'une deuxième patte s'étendant à une deuxième extrémité de ladite platine et présentant une encoche d'attache oblongue.

Les bras de retenue du support de fixation selon l'invention permettent de maintenir en permanence la garniture d'habillage latérale à une distance prédéterminée du boîtier électronique (constitué par exemple par un amplificateur audio), et notamment lorsque cette dernière est soumise durant les phases de virage à des contraintes latérales exercées par les charges contenues dans le coffre.

L'invention évite donc d'avoir à surdimensionner en conception l'écartement de cette garniture d'habillage vis-à-vis du flanc latéral correspondant, ce qui permet d'optimiser le volume utile de rangement du coffre.

Selon des caractéristiques préférées dudit support :
- la platine et lesdits bras de retenue sont réalisés par pliage et emboutissage à partir d'une même feuille de tôle préalablement découpée ;
- lesdits bras de retenue présentent, au niveau de leurs lignes de pliures, des nervures de rigidification embouties ;
- lesdits moyens de fixation comportent une pluralité de goujons filetés s'étendant transversalement en saillie depuis ladite face externe de la platine ;
- ladite platine comporte une patte d'ancrage s'étendant à une troisième de ses extrémités et présentant une portion distale recourbée munie d'un orifice permettant de solidariser ledit support au plancher dudit véhicule ; et/ou
- ladite platine comporte au moins une boutonnière prévue pour permettre la fixation par encliquetage d'une agrafe de serrage d'un faisceau électrique d'alimentation branché sur ledit boîtier.

L'invention concerne également sous un second aspect un ensemble comportant un tel support de fixation et un dit boîtier électronique monté sur ledit support par l'intermédiaire desdits moyens de fixation.

De préférence, les extrémités libres recourbées desdits bras de retenue saillent transversalement de la face externe dudit boîtier d'une distance prédéterminée comprise avantageusement entre 20 et 30 mm.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective de la partie latérale droite d'un coffre de véhicule automobile dépourvu de sa garniture d'habillage et intégrant un amplificateur fixé contre un flanc latéral de la structure latérale de caisse par l'intermédiaire d'un support de fixation selon l'invention ;
- la figure 2 est une vue en perspective de trois quart avant du support de fixation de la figure 1 ;
- la figure 3 représente une vue en perspective de trois quart arrière du support de fixation de la figure 1 ; et
- la figure 4 est une vue de coupe en perspective selon un plan transversal de la zone d'implantation de l'amplificateur.

### Description détaillée d'un mode préféré de réalisation

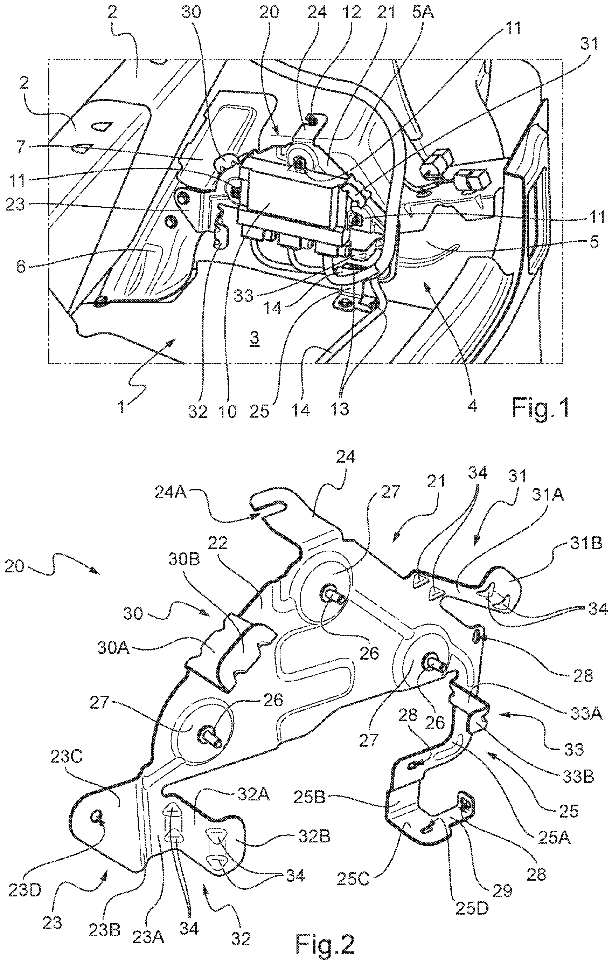

La figure 1 représente une vue partielle d'un coffre 1 de véhicule automobile délimité à l'avant par les dossiers 2 d'une rangée de sièges arrière, en partie basse par un plancher 3, à l'arrière par un panneau de coffre ou un hayon non visible, en partie supérieure par des moyens d'occultation formés par une tablette arrière fixe ou amovible non représentée, et sur les côtés par deux flancs latéraux dont seul le flanc droit 4 est visible.

Ce dernier comporte une paroi latérale 5 constituant une partie de la structure de caisse du véhicule et dans laquelle est ménagé un bossage 5A formant passage de roue.

Le flanc latéral 4 comprend également à son extrémité avant deux pièces métalliques de renfort en tôle emboutie 6, 7 fixées l'une au dessus de l'autre à la paroi latérale 5 (la pièce inférieure de renfort 6 étant en outre fixée au plancher 3) et comblant l'évidemment formé dans cette paroi latérale 5 à l'avant du bossage 5A.

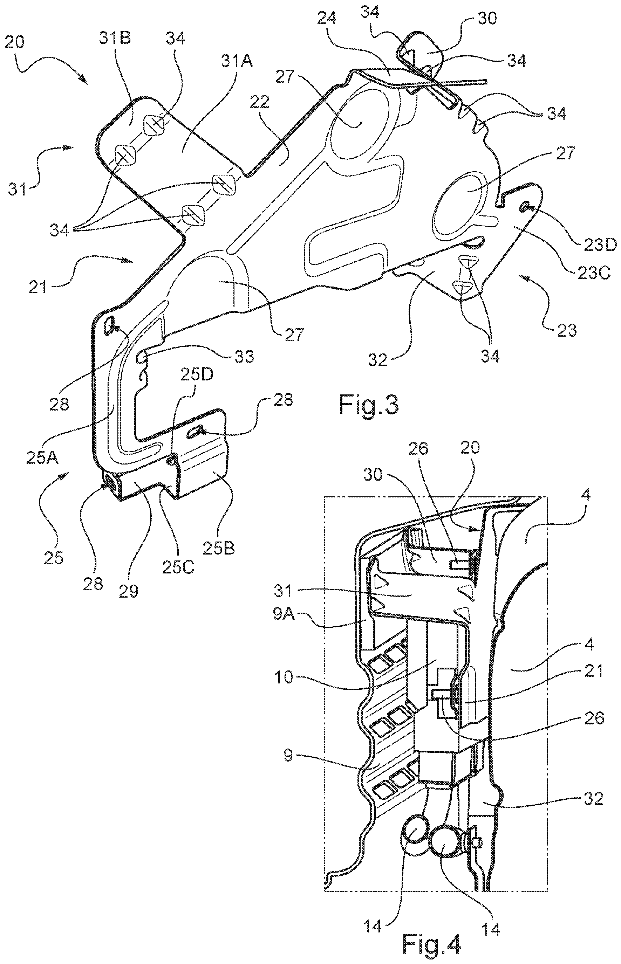

En référence à la figure 4, ce flanc latéral 4 est recouvert par une garniture d'habillage latérale semi-rigide 9 en matière plastique ou en moquette, obtenue par exemple par moulage ou thermoformage et dont la géométrie est définie par les contraintes de l'architecture du véhicule et notamment par la forme de la paroi latérale.

Le coffre 1 héberge un boîtier électronique constitué par un amplificateur audio 10 intercalé entre la garniture d'habillage latérale 9 et le flanc latéral droit 4 tel qu'illustré sur cette figure 4,

Comme on peut le voir sur la figure 1, cet amplificateur 10 est fixé contre ce flanc latéral droit 4 par l'intermédiaire d'un support de fixation 20 selon l'invention.

On va maintenant décrire en détails ce support de fixation 20 à l'appui des figures 2 et 3.

Dans la suite de cette description et par convention, les termes « avant », « arrière », « supérieur », « inférieur », « longitudinal » et « transversal » seront définis par rapport à la position occupée par ce support 20 dans sa configuration de service où il est fixé sur le flanc latéral droit 4.

Le support de fixation 20 comporte une platine métallique 21 présentant une face externe d'accueil pour l'amplificateur audio 10.

Cette platine 21 comprend une plaque de forme triangulaire 22 s'étendant selon un plan longitudinal vertical et prévue pour recevoir l'amplificateur 10, deux pattes d'arrimage avant 23 et supérieure 24 permettant de solidariser rigidement le support 20 respectivement à la pièce inférieure de renfort 6 et à la portion supérieure du bossage 5A du flanc latéral 4, et une patte d'ancrage inférieure 25 permettant de solidariser rigidement ce support 20 au plancher 3.

Le support 20 comprend également trois goujons filetés de fixation 26 s'étendant transversalement en saillie depuis la face externe de la platine 21 et permettant de solidariser rigidement l'amplificateur audio 10 à cette platine 21.

Plus précisément, ces trois goujons 26 sont soudés au centre de trois bossages circulaires 27 réalisés par emboutissage sur la plaque triangulaire 22 à proximité de ses trois sommets afin de faciliter le positionnement de la tête d'un outil de soudure.

Tel qu'illustré par la figure 1, les trois goujons 26 sont prévus pour coopérer avec trois pattes 11 ménagées sur l'amplificateur 10 et dotées chacune d'un orifice destiné à être enfilé sur un dit goujon correspondant pour permettre la fixation de cet amplificateur 10 sur le support 20 à l'aide d'écrous venant se visser sur ces goujons 26.

S'étendant à une première extrémité de la platine 21 dans le prolongement du sommet inférieur avant de la plaque 22, la patte d'arrimage avant 23 comprend une portion proximale 23A s'étendant vers le bas coplanairement à la paroi 22, une portion intermédiaire inclinée 23B s'étendant du côté externe, ainsi qu'une portion distale 23C s'étendant en avant de la plaque 22 et selon un plan longitudinal vertical parallèle à cette dernière.

Cette portion distale 23C présente en outre un orifice d'attache circulaire 23D destiné à permettre, tel que représenté sur la figure 1, la fixation de la patte avant 23 sur la pièce inférieure de renfort 6, à l'aide d'une vis traversant cet orifice ainsi qu'un trou ménagé dans la pièce de renfort 6 et venant se visser sur un écrou soudé autour de ce trou sur la face interne de cette pièce 6.

S'étendant à une deuxième extrémité de la platine 21 dans le prolongement du sommet supérieur de la plaque 22, la patte d'arrimage supérieure 24 inclinée côté interne présente une encoche d'attache oblongue 24A destiné à permettre, tel que représenté sur la figure 1, sa fixation sur le dessus du bossage 5A de la paroi latérale 5, à l'aide d'un écrou venant se visser sur un goujon fileté 12 soudé sur ce bossage 5A et préalablement inséré dans cette encoche 24A.

S'étendant à une troisième extrémité de la platine 21 dans le prolongement du sommet inférieur arrière de la plaque 22, la patte d'ancrage inférieure 25 comprend une portion proximale 25A en forme d'équerre s'étendant vers le bas puis vers l'avant coplanairement à la paroi 22, une portion intermédiaire 25B s'étendant vers le bas depuis l'extrémité libre de la portion proximale 25A et selon un plan sensiblement coplanaire à cette dernière, ainsi qu'une portion distale recourbée 25C s'étendant du côté externe perpendiculairement à la portion intermédiaire 25B et selon un plan horizontal.

Cette portion distale recourbée 25C présente en outre un orifice d'attache oblong 25D destiné à permettre, tel que représenté sur la figure 1, la fixation de la patte inférieure 25 sur le plancher 3, à l'aide d'une vis traversant cet orifice 23D ainsi qu'un trou ménagé dans ce plancher 3 et venant se visser sur un écrou soudé autour de ce trou sur la face inférieure de ce même plancher 3.

La platine 21 comporte également trois boutonnières 28 ménagées dans sa partie arrière et destinées chacune, tel qu'illustré sur la figure 1, à permettre la fixation par encliquetage d'une agrafe de serrage respective 13 des différents faisceaux électriques d'alimentation 14 branchés sur l'amplificateur 10.

Ces boutonnières 28 sont agencées respectivement sur la plaque 22 à proximité de son sommet inférieur arrière, à l'extrémité libre de la portion proximale 25A en forme d'équerre de la patte inférieure 25, et à l'extrémité libre d'une languette recourbée 29 raccordée à la portion distale 25C de cette même patte inférieure 25.

Le support 20 comporte enfin quatre bras de retenue à section en L 30, 31, 32, 33 comprenant chacun une partie principale allongée 30A, 31A, 32A, 33A s'étendant transversalement en saillie depuis la face externe de la platine 21, ainsi qu'une extrémité libre recourbée 30B, 31B, 32B, 33B s'étendant perpendiculairement à la cette branche proximale et selon un plan longitudinal vertical parallèle à la plaque 22.

Tel qu'illustré sur la figure 4, les extrémités libres recourbées 30B, 31B, 32B, 33B des bras sont prévues pour reposer en appui contre une plaque de mousse 9A ménagée sur la face interne de la garniture d'habillage latérale 9 de sorte à la retenir latéralement.

La longueur des bras est en outre calculée de sorte à maintenir en permanence leurs extrémités libres recourbées (et donc la garniture d'habillage latérale 9 y reposant) écartées d'une distance prédéterminée avantageusement comprise entre 20 et 30 mm de la face externe de l'amplificateur audio 10 fixé contre la plaque 22 de la platine 21.

Un tel amplificateur audio présentant classiquement une épaisseur d'environ 50 mm, la longueur des bras 30, 31, 32, 33 sera donc en pratique d'au moins 70 mm et avantageusement comprise entre 70 et 80 mm.

De préférence, les bras de retenue 30, 31, 32, 33 et la platine 21 sont réalisés par pliage et emboutissage à partir d'une même feuille de tôle (avantageusement en acier ou en aluminium) préalablement découpée.

Afin d'améliorer leur tenue mécanique à la déformation, les bras de retenue 30, 31, 32, 33 présentent avantageusement au niveau de leurs lignes de pliures des nervures de rigidification 34 embouties.

Les deux bras 30, 31 s'étendent depuis la plaque 22 de manière symétrique par rapport au plan transversal médian de cette dernière. Plus précisément, le bras 30 prend racine sur le bord latéral 22A de cette plaque 22 reliant ses sommets avant et supérieur, tandis que le bras 31 prend racine sur son bord latéral 22B reliant ses sommets arrière.

Les deux bras 32, 33 s'étendent quant à eux depuis les deux pattes avant 23 et inférieure 25. Plus précisément, le bras 32 prend racine sur le bord arrière de la portion proximale 23A de la patte avant 23, tandis que le bras 33 prend racine sur le bord avant de la portion proximale 25A en forme d'équerre de la patte inférieure 25.

Selon des variantes de réalisation non représentées, les moyens de fixation du boîtier sur la platine et/ou les moyens d'arrimage du support sur le flanc latéral de la structure de caisse sont différents.

Selon d'autres variantes de réalisation non représentées, le nombre et/ou la forme des bras de retenue sont également différents.

Selon encore d'autres variantes de réalisation non représentées, la platine et les bras de retenues sont venus de moulage d'une seule pièce à partir d'un matériau thermoplastique renforcé en fibres naturelles et/ou synthétiques.

Bien entendu, la présente invention ne se limite pas aux formes de réalisation décrites et représentées, mais elle englobe toute autre variante d'exécution à la portée de l'homme du métier.

## Revendications

1. Support de fixation pour boîtier électronique (10) destiné à être monté dans la partie latérale d'un coffre (1) de véhicule automobile entre un flanc latéral (4) de la structure de caisse dudit véhicule et une garniture d'habillage latérale (9) le recouvrant, ledit support comportant :
- une platine (21) présentant une face externe d'accueil pour ledit boîtier (10),
- des moyens de fixation (26) permettant de solidariser ledit boîtier (10) à ladite platine (21), et
- des moyens d'arrimage (23, 24) permettant de solidariser ledit support audit flanc latéral (4) ;
ledit support comportant également plusieurs bras de retenue (30, 31, 32, 33) s'étendant transversalement en saillie depuis ladite face externe de la platine (21) et présentant des extrémités libres recourbées (30B, 31B, 32B, 33B) prévues pour de sorte à reposer en appui contre la face interne de ladite garniture d'habillage latérale (9), lorsque la platine est installée sur le véhicule,
ledit support étant **caractérisé en ce que** lesdits moyens d'arrimage comportent une première patte (23) s'étendant à une première extrémité de ladite platine (21) et présentant un orifice d'attache circulaire (23D), ainsi qu'une deuxième patte (24) s'étendant à une deuxième extrémité de ladite platine (21) et présentant une encoche d'attache oblongue (24A).

2. Support de fixation selon la revendication 1, **caractérisé en ce que** la platine (21) et lesdits bras de retenue (30, 31, 32, 33) sont réalisés par pliage et emboutissage à partir d'une même feuille de tôle préalablement découpée.

3. Support de fixation selon la revendication 2, **caractérisé en ce que** lesdits bras de retenue (30, 31, 32, 33) présentent, au niveau de leurs lignes de pliures, des nervures de rigidification embouties (34).

4. Support de fixation selon l'une des revendications 1 à 3, **caractérisé en ce que** lesdits moyens de fixation comportent une pluralité de goujons filetés (26) s'étendant transversalement en saillie depuis ladite face externe de la platine (21).

5. Support de fixation selon la revendication 4, **caractérisé en ce que** ladite platine (21) comporte une patte d'ancrage (25) s'étendant à une troisième de ses extrémités et présentant une portion distale recourbée (25C) munie d'un orifice (25D) permettant de solidariser ledit support au plancher (3) dudit véhicule.

6. Support de fixation selon l'une des revendications 1 à 5, **caractérisé en ce que** ladite platine (21) comporte au moins une boutonnière (28) prévue pour permettre la fixation par encliquetage d'une agrafe de serrage (13) d'un faisceau électrique d'alimentation (14) branché sur ledit boîtier (10).

7. Ensemble comportant un support de fixation (20) selon l'une des revendications 1 à 6, et un dit boîtier électronique monté sur ledit support par l'intermédiaire desdits moyens de fixation (26).

8. Ensemble selon la revendication 7, **caractérisé en ce que** les extrémités libres recourbées (30B, 31B, 32B, 33B) desdits bras de retenue (30, 31, 32, 33) saillent transversalement de la face externe dudit boîtier (10) d'une distance prédéterminée.

9. Ensemble selon la revendication 8, **caractérisé en ce que** ladite distance prédéterminée est comprise entre 20 et 30 mm.

## Patentansprüche

1. Halterung für ein elektronisches Gehäuse (10) zur Befestigung im Seitenteil eines Kraftfahrzeugkofferraums (1) zwischen einer Seitenflanke (4) der Karosseriekonstruktion des Fahrzeugs und einer diesen überdeckenden Seitenverkleidung (9), wobei die Halterung umfasst:
- eine Platine (21) mit einer äußeren Aufnahmeseite für das Gehäuse (10),
- Befestigungsmittel (26) zur Befestigung des Gehäuses (10) an der Platine (21) und
- Befestigungsmittel (23, 24) zur Befestigung des Trägers an der Seitenflanke (4);
der Halter ferner mehrere Haltearme (30, 31, 32, 33) aufweist, die sich quer von der Außenseite der Platine (21) erstrecken und gekrümmte freie Enden (30B, 31B, 32B, 33B) aufweisen, die so ausgebildet sind, dass sie bei am Fahrzeug angebrachter Platine an der Innenseite der seitlichen Verkleidung (9) anliegen,
ledit support étant **caractérisé en ce que** lesdits moyens d'arrimage comportent une première patte (23) s'étendant à une première extrémité de ladite platine (21) et présentant un orifice d'attache circulaire (23D), ainsi qu'une deuxième patte (24) s'étendant à une deuxième extrémité de ladite platine (21) et présentant une encoche d'attache oblongue (24A).

2. Befestigungsträger nach Anspruch 1, **dadurch gekennzeichnet, dass** die Platine (21) und die Haltearme (30, 31, 32, 33) durch Biegen und Tiefziehen aus ein und derselben zuvor geschnittenen Blechfolie hergestellt sind.

3. Befestigungsträger nach Anspruch 2, **dadurch gekennzeichnet, dass** die Haltearme (30, 31, 32, 33) an ihren Faltlinien tiefgezogene Versteifungsrippen (34) aufweisen.

4. Befestigungshalterung nach einem der Ansprüche 1 bis 3, **dadurch gekennzeichnet, dass** die Befestigungsmittel eine Vielzahl von Gewindebolzen (26) umfassen, die sich quer von der Außenfläche der Platine (21) erstrecken.

5. Befestigungsträger nach Anspruch 4, **dadurch gekennzeichnet, dass** die Platte (21) eine Verankerungslasche (25) aufweist, die sich an einem dritten ihrer Enden erstreckt und einen gekrümmten distalen Abschnitt (25C) aufweist, der mit einer Öffnung (25D) versehen ist, die es ermöglicht, den Träger mit dem Boden (3) des Fahrzeugs zu verbinden.

6. Befestigungsträger nach einem der Ansprüche 1 bis 5, **dadurch gekennzeichnet, dass** die Platine (21) mindestens ein Langloch (28) aufweist, das vorgesehen ist, um die Befestigung einer Klemmklammer (13) eines elektrischen Versorgungsbündels (14), das an das Gehäuse (10) angeschlossen ist, durch Einrasten zu ermöglichen.

7. Anordnung mit einem Befestigungsträger (20) nach einem der Ansprüche 1 bis 6 und einem elektronischen Gehäuse, das über die Befestigungsmittel (26) an dem Träger angebracht ist.

8. Anordnung nach Anspruch 7, **dadurch gekennzeichnet, dass** die gebogenen freien Enden (30B, 31B, 32B, 33B) der Haltearme (30, 31, 32, 33) quer von der Außenfläche des Gehäuses (10) um einen vorbestimmten Abstand vorstehen.

9. Anordnung nach Anspruch 8, **dadurch gekennzeichnet, dass** der vorbestimmte Abstand zwischen 20 und 30 mm liegt.

## Claims

1. A mounting bracket for an electronic housing (10) for mounting in the side portion of a trunk (1) of a motor vehicle between a side flank (4) of the body structure of the motor vehicle and a side trim (9) covering the same, said bracket comprising:
- a plate (21) having an outer receiving face for the housing (10),
- fastening means (26) for securing said housing (10) to said plate (21), and
- securing means (23, 24) for securing said support to said side flank (4);
the support also comprises a plurality of retaining arms (30, 31, 32, 33) extending transversely projecting from the outer face of the plate (21) and having curved free ends (30B, 31B, 32B, 33B) adapted to rest against the inner face of the lateral trim (9) when the plate is installed on the vehicle,
said support being **characterized in that** said securing means comprise a first tab (23) extending at a first end of said plate (21) and having a circular fastening orifice (23D), and a second tab (24) extending at a second end of said plate (21) and having an oblong fastening notch (24A).

2. Fixing support according to Claim 1, **characterized in that** the plate (21) and the said retaining arms (30, 31, 32, 33) are produced by folding and stamping from the same sheet of sheet metal previously cut.

3. Fixing support according to claim 2, **characterized in that** said retaining arms (30, 31, 32, 33) have, at their fold lines, pressed stiffening ribs (34).

4. Fixing bracket in accordance with one of the claims 1 to 3, **characterized by** the fact that the said fasteners contain a plurality of threaded pins (26) extending vertically upward from the outer face of the platinum (21).

5. Fixing bracket according to claim 4, **characterized in that** said deck (21) has an anchor tab (25) extending to a third end of the deck and having a curved distal portion (25C) with a hole (25D) to connect the bracket to the floor (3) of the vehicle.

6. Fixing bracket in accordance with one of the claims 1 to 5, **characterized in that** the said deck (21) has at least one button (28) designed to allow the latching of a power supply electric harness (14) connected to the said enclosure (10).

7. A kit containing a mounting bracket (20) according to one of claims 1 to 6, and an electronic box mounted on such bracket through the said mounting brackets (26).

8. Together according to claim 7, **characterized in that** the curved free ends (30B, 31B, 32B, 33B) of the said retention arms (30, 31, 32, 33) protrude horizontally from the outer face of the said enclosure (10) at a predetermined distance.

9. Set according to claim 8, characterized as the predetermined distance is between 20 and 30 mm.
